# EUROPEAN PATENT SPECIFICATION

(11) **EP 3 905 101 B1**
(45) Date of publication and mention of the grant of the patent: **27.05.2026**
(21) Application number: 19903100.6
(22) Date of filing: 18.12.2019
(51) Int. Cl.: G06V 10/141, G06V 40/13, H04M 1/02, G06F 3/14, H04M 1/72454, G06F 3/147

(54) **MOBILE TERMINAL AND RECOGNITION METHOD**
MOBILES ENDGERÄT UND ERKENNUNGSVERFAHREN
TERMINAL MOBILE ET PROCÉDÉ DE RECONNAISSANCE

(30) Priority: 28.12.2018 CN 201811620728
(43) Date of publication of application: 03.11.2021
(73) Proprietor: VIVO MOBILE COMMUNICATION CO., LTD., Dongguan, Guangdong 523860 (CN)
(72) Inventor: YE, Jinshan, Dongguan, Guangdong 523860 (CN)
(74) Representative: Lavoix
(86) International application number: PCT/CN2019/126282
(87) International publication number: WO 2020/135182

(56) References cited:
- WO-A2-01/69520
- CN-A- 105 354 455
- CN-A- 108 012 003
- CN-A- 108 012 003
- CN-A- 108 040 170
- CN-A- 108 122 501
- CN-A- 108 446 670
- CN-A- 108 446 670
- CN-A- 108 537 021
- CN-A- 109 740 496
- CN-A- 109 886 228
- US-A1- 2017 147 853

## Description

### TECHNICAL FIELD

This disclosure relates to the field of electronics technologies, and in particular, to a mobile terminal and a recognition method.

### BACKGROUND

In the related art, for security of user information, a fingerprint recognition function is increasingly common in mobile terminals such as mobile phones. For example, the fingerprint recognition function is quite convenient and quick in screen unlocking, mobile payment (for example, WeChat payment and transfer), and the like. However, with continuous development of electronic technologies, dual-screen mobile phones with screens on the front and back have gradually become a development trend. To implement the fingerprint recognition function on both screens of the dual-screen mobile phones, two separate fingerprint module units, including two separate optical lenses, two separate fingerprint sensors, and the like, need to be disposed in a mobile phone. Undoubtedly, this greatly increases costs and occupied structural space, and a lightweight design requirement is hard to meet. Therefore, this problem needs to be urgently solved. CN108012003A provides a double-screen mobile phone comprises a phone body, a gravity sensor and a processor; the front face of the phone body is provided with a first display screen and a first fingerprint acquisition module located under the first display screen, and the back face of the phone body is provided with a second display screen and a second fingerprint acquisition module located under the second display screen; and the processor is used for judging whether or not the current orientation is the first orientation, judging whether or not a fingerprint acquired by the first fingerprint acquisition module is a preset unlocking fingerprint when the current orientation is the first orientation, controlling the first display screen to display and controlling the second display screen to keep closed when the fingerprint acquired by the first fingerprint acquisition module is the unlocking fingerprint, judging whether or not a fingerprint acquired by the second fingerprint acquisition module is the unlocking fingerprint when the current orientation is the second orientation opposite to the first orientation and controlling the second display screen to display and controlling the first display screen to keep closed when the fingerprint acquired by the second fingerprint acquisition module is the unlocking fingerprint. CN108446670A discloses a fingerprint recognition device comprises an optical fingerprint sensor which is arranged below the display screen and a reflector which is arranged below the display screen. The reflector is arranged to be corresponding to the fingerprint recognition area of the display screen. The reflector is used for receiving the first reflected light produced by the object above the fingerprint recognition area and reflecting the first reflected light so as to produce the second reflected light irradiating to the optical fingerprint sensor, wherein the first reflected light is the light emitted by the display screen and produced by reflection on the object and irradiated to the reflector, and the optical fingerprint sensor is used for acquiring the second reflected light and performing acquisition of the fingerprint image according to the acquired second reflected light.

### SUMMARY

Embodiments of this disclosure provide a mobile terminal and a recognition method, to resolve the problems of high costs and occupation of large structural space in implementing a fingerprint recognition function on dual screens in the related art.

To resolve the foregoing technical problem, this disclosure provides a mobile terminal and a recognition method as defined in the appended set of claims.

### BRIEF DESCRIPTION OF DRAWINGS

FIG. 1 is a schematic diagram of a basic principle of a fingerprint recognition technology;
FIG. 2 is a schematic structural diagram of a mobile terminal according to an embodiment of this disclosure;
FIG. 3 is a schematic structural diagram of a light adjustment piece according to an embodiment of this disclosure; and
FIG. 4 is a flowchart of a recognition method according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are merely some rather than all of the embodiments of this disclosure.

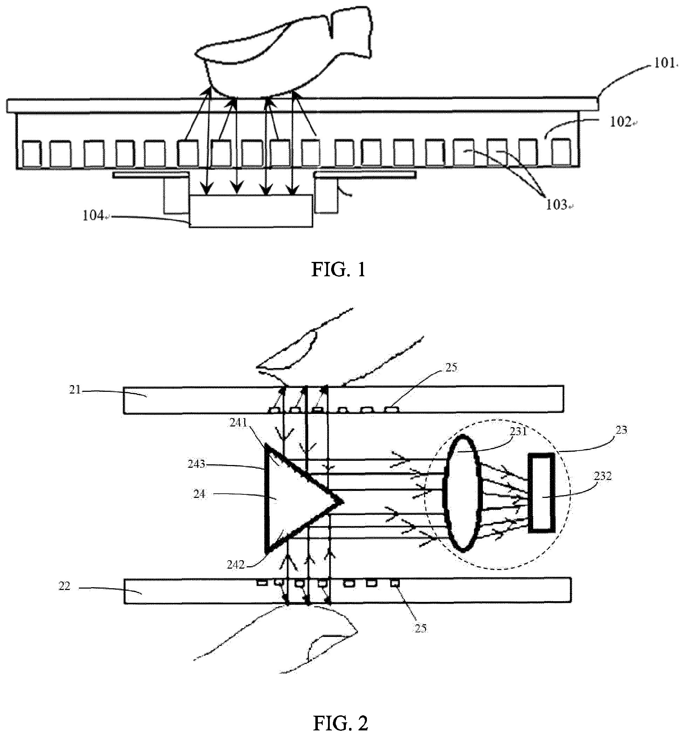

To better understand this disclosure, a basic principle of a fingerprint recognition technology in this disclosure is first described briefly. As shown in FIG. 1, a display panel includes a protective glass cover 101 and an OLED screen unit 102. A light emitting source 103 is disposed on the OLED screen unit 102. When a finger is pressed on the protective glass cover 101 of the display panel, light emitted by the light emitting source 103 is reflected by the finger and passes through the protective glass cover 101 and the OLED screen unit 102 of the display panel, and then is received by a fingerprint recognition module 104, so that a fingerprint recognition function is implemented. However, to implement the fingerprint recognition function on dual screens, two separate fingerprint recognition modules need to be disposed, greatly increasing costs and occupied space.

In some embodiments of this disclosure, as shown in FIG. 2, a mobile terminal is provided, including:
a first display panel 21, where the first display panel 21 is a transparent piece;
a second display panel 22, where the second display panel 22 is disposed facing away from the first display panel 21, and the second display panel 22 is a transparent piece;
a recognition module 23, where the recognition module 23 is disposed between the first display panel 21 and the second display panel 22; and
a light adjustment piece 24, where the light adjustment piece 24 is disposed between the first display panel 21 and the second display panel 22, and is configured to reflect light entering from the first display panel 21 and the second display panel 22 to the recognition module 23.

Herein, both the first display panel 21 and the second display panel 22 are made of transparent materials, so that both the first display panel 21 and the second display panel 22 can transmit light to implement a function of recognizing biometric information. When biometric information input is detected, a target display panel to which the biometric information input is applied may be controlled to emit light. The target display panel is one of the first display panel 21 and the second display panel 22, so that the light emitted by the target display panel is blocked by a biological body and then reflected to the target display panel. The light adjustment piece 24 reflects light entering from the target display panel to the recognition module 23. The recognition module 23 uses the light reflected by the light adjustment piece 24 to recognize the current biometric information input. In this way, biometric information recognition can be implemented using only one recognition module for two display panels, reducing costs and occupied space.

The recognition module 23 may be, for example, a fingerprint recognition module, a face recognition module, a pupil recognition module, or the like, but is not limited thereto. The fingerprint recognition module is used as an example. When a finger is pressed on the first display panel 21 or the second display panel 22 and fingerprint information input is detected, a target display panel to which the fingerprint information input is applied may be controlled to emit light, and the light emitted by the target display panel is blocked by the finger and then reflected to the target display panel. The light adjustment piece 24 reflects the light entering from the target display panel to the fingerprint recognition module. The fingerprint recognition module can use the light reflected by the light adjustment piece 24 to perform fingerprint recognition on the current fingerprint information input. In this way, fingerprint recognition can be implemented using one recognition module for two display panels, reducing costs and occupied space.

Both the first display panel 21 and the second display panel 22 may be an organic light-emitting diode (OLED) display panels, but are not limited thereto.

Light emitting units of the first display panel 21 and the second display panel 22 may be used as light emitting sources, or separately disposed light emitting units may be used as light emitting sources. For example, when both the first display panel 21 and the second display panel 22 are OLED display panels, self-emitting pixel units of the OLED display panel may be used as light emitting sources. When the biometric information input is detected, a light emitting source of a target display panel to which the biometric information input is applied is controlled to emit light, and the light emitted by the light emitting source is blocked by a biological body and then reflected to the target display panel.

For example, it is assumed that the recognition module 23 is a fingerprint recognition module. As shown in FIG. 2, when a finger is pressed on the first display panel 21, light emitted by a light emitting source 25 of the first display panel 21 is blocked by the finger on the first display panel 21 and then reflected to the first display panel 21. The light adjustment piece 24 changes a transmission path of the light entering from the first display panel 21, to reflect the light entering from the first display panel 21 to the recognition module 23. The recognition module 23 uses the light reflected by the light adjustment piece 24 to perform fingerprint recognition.

Similarly, when a finger is pressed on the second display panel 22, light emitted by a light emitting source 25 of the second display panel 22 is blocked by the finger on the second display panel 22 and then reflected to the second display panel 22. The light adjustment piece 24 changes a transmission path of the light entering from the second display panel 22, to reflect the light entering from the second display panel 22 to the recognition module 23. The recognition module 23 uses the light reflected by the light adjustment piece 24 to perform fingerprint recognition.

The mobile terminal according to the embodiments of this disclosure transmits the light entering from the first display panel 21 and the second display panel 22 to the recognition module through the light adjustment piece 24, so that biometric information recognition (for example, a fingerprint recognition function) can be implemented using one recognition module for two display panels, thereby reducing costs and occupied space.

Optionally, the light adjustment piece 24 includes a first reflection surface 241 and a second reflection surface 242, where the first reflection surface 241 is obliquely disposed toward the first display panel 21, the first reflection surface 241 reflects light entering from the first display panel 21 to the recognition module 23, the second reflection surface 242 is obliquely disposed toward the second display panel 22, and the second reflection surface 242 reflects light entering from the second display panel 22 to the recognition module 23.

In this case, as shown in FIG. 2, the light adjustment piece 24 includes two reflection surfaces, and the first reflection surface 241 is obliquely disposed toward the first display panel 21. The first reflection surface 241 can change a transmission path of the light entering from the first display panel 21, and reflect the light entering from the first display panel 21 to the recognition module 23, to implement a function (for example, a fingerprint recognition function) of recognizing biometric information on the first display panel 21. The second reflection surface 242 is obliquely disposed toward the second display panel 22. The second reflection surface 242 can change a transmission path of the light entering from the second display panel 22, and reflect the light entering from the second display panel 22 to the recognition module 23, to implement a function (for example, a fingerprint recognition function) of recognizing biometric information on the second display panel 22. In this way, biometric information recognition (for example, a fingerprint recognition function) can be implemented using one recognition module for two display panels, reducing costs and occupied space.

Optionally, the recognition module 23 is a fingerprint recognition module. The fingerprint recognition module includes an optical lens 231 and a fingerprint sensor 232, where the optical lens 231 and the fingerprint sensor 232 are disposed between the first display panel 21 and the second display panel 22; and the light adjustment piece 24 is configured to reflect the light entering from the first display panel 21 and the second display panel 22 to the optical lens 231.

In this case, as shown in FIG. 2, the light adjustment piece 24 reflects the light entering from the first display panel 21 and the second display panel 22 to the optical lens 231. The optical lens 231 then transmits the light reflected by the light adjustment piece 24 to the fingerprint sensor 232. The fingerprint sensor 232 uses the light transmitted by the optical lens 231 to perform fingerprint recognition, so that a function of recognizing a fingerprint on dual screens can be implemented through one fingerprint recognition module.

This disclosure does not limit a method for performing fingerprint recognition by the fingerprint sensor 232 through light, and any reasonable method may be used, provided that fingerprint recognition can be implemented.

Optionally, an included angle between the first reflection surface 241 and the first display panel 21 is an acute angle (for example, 45° or 60°), to ensure that the first reflection surface 241 can reflect the light entering from the first display panel 21 to the recognition module 23 located on one side of the first reflection surface 241 and the second reflection surface 242. Optionally, an included angle between the second reflection surface 242 and the second display panel 22 is also an acute angle (for example, 45° or 60°), to ensure that the second reflection surface 242 can reflect the light entering from the second display panel 22 to the recognition module 23 located on one side of the first reflection surface 241 and the second reflection surface 242.

For example, as shown in FIG. 2, the mobile terminal includes the first display panel 21 and the second display panel 22 disposed facing away from each other. Both the first display panel 21 and the second display panel 22 are OLED panels. An included angle between the first reflection surface 241 and the first display panel 21 is 45°, and an included angle between the second reflection surface 242 and the second display panel 22 is also 45°. The recognition module 23 is a fingerprint recognition module. The optical lens 231 and the fingerprint sensor 232 of the recognition module are disposed on one side of the first reflection surface 241 and the second reflection surface 242. In this case, when a finger is pressed on the first display panel 21 or the second display panel 22, light from a light emitting pixel unit of the first display panel 21 or the second display panel 22 is blocked by a fingerprint of the finger and then reflected to the first reflection surface 241 or the second reflection surface 242, then reflected to the optical lens 231, and finally implements fingerprint imaging on the fingerprint sensor 232. In this way, a function of recognizing a fingerprint on the first display panel 21 and the second display panel 22 is implemented through one fingerprint recognition module, reducing costs and occupied space.

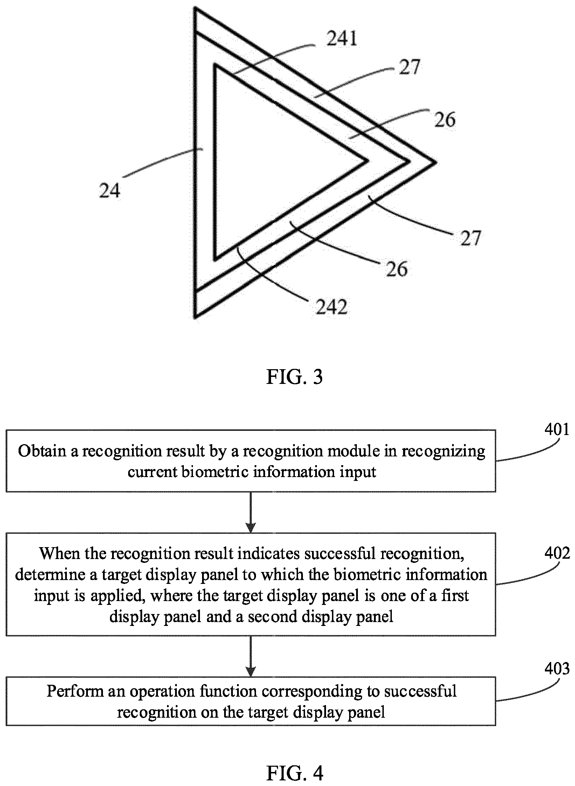

Optionally, as shown in FIG. 3, a reflective material layer 26 is disposed on each of the first reflection surface 241 and the second reflection surface 242.

In this case, the reflective material layers 26 on the first reflection surface 241 and the second reflection surface 242 can reflect the light entering from the first display panel and the second display panel to change a transmission path of the light, so as to reflect the light entering from the first display panel and the second display panel to the recognition module. In this way, biometric information recognition (for example, a fingerprint recognition function) can be implemented using one recognition module for two display panels.

Optionally, the reflective material layer 26 is made of aluminum or mercury, but it is not limited thereto.

Optionally, a transparent material layer 27 is disposed on each of the reflective material layers 26 of the first reflection surface 241 and the second reflection surface 242.

In this case, the transparent material layer 27 can protect the reflective material layer 26. In addition, the transparent material layer 27 can transmit light, so that the light entering from the first display panel can pass through the transparent material layer 27 on the first reflection surface 241, and then is reflected by the reflective material layer 26 at the bottom of the first reflection surface 241. Similarly, the light entering from the second display panel can pass through the transparent material layer 27 on the second reflection surface 242, and then is reflected by the reflective material layer 26 at the bottom of the second reflection surface 242. This does not affect the function of changing light transmission paths of the first reflection surface 241 and the second reflection surface 242.

Optionally, the transparent material layer 27 is made of glass, but it is not limited to thereto.

Optionally, as shown in FIG. 2, the light adjustment piece 24 further includes a bottom surface 243, and the first reflection surface 241, the bottom surface 243, and the second reflection surface 242 are connected in sequence.

In this case, the first reflection surface 241, the bottom surface 243, and the second reflection surface 242 form an integral and stable structure that facilitates installation and removal.

Optionally, the first reflection surface 241, the second reflection surface 242, and the bottom surface 243 form an isosceles triangle.

In this case, the first reflection surface 241, the second reflection surface 242, and the bottom surface 243 form an isosceles triangle, further enhancing the stability of the structure. In addition, symmetry between the first reflection surface 241 and the second reflection surface 242 is beneficial to uniformity of light reflected from the first reflection surface 241 and the second reflection surface 242.

Optionally, there is a hollow structure between the first reflection surface 241 and the second reflection surface 242.

In this case, the hollow structure between the first reflection surface 241 and the second reflection surface 242 reduces mass of the structural and is beneficial to a lightweight design of the terminal.

Alternatively, a filling material is disposed between the first reflection surface 241 and the second reflection surface 242.

In this case, the filling material disposed between the first reflection surface 241 and the second reflection surface 242 further ensures stability of the structure.

Optionally, the filling material is resin, but is not limited thereto.

The optical lens 231 with a sufficiently large area may be selected to ensure that the optical lens 231 can transmit all light reflected by the first reflection surface 241 and the second reflection surface 242 to the fingerprint sensor 232. For example, the selected optical lens 231 at least has an area larger than a projected area of the first reflection surface 241 on a plane where the optical lens 231 is located, and larger than a projected area of the second reflection surface 242 on a plane where the optical lens 231 is located.

A specific application example of the mobile terminal in the embodiments of this disclosure is described as follows.

As shown in FIG. 2, the mobile terminal includes the first display panel 21 and the second display panel 22 disposed facing away from each other. Both the first display panel 21 and the second display panel 22 are OLED panels. The light adjustment piece 24 includes the first reflection surface 241, the second reflection surface 242, and the bottom surface 243 that form an isosceles triangle (a triangular prism). The triangular prism is a hollow prism inside or has a filling material such as resin inside. An included angle between the first reflection surface 241 and the first display panel 21 is 45°, and an included angle between the second reflection surface 242 and the second display panel 22 is also 45°. The reflective material layer 26 and the transparent material layer 27 are disposed on each of the first reflection surface 241 and the second reflection surface 242 in sequence. The reflective material layer 26 is made of aluminum with a strong light-reflecting ability. The recognition module 23 is a fingerprint recognition module. The optical lens 231 and the fingerprint sensor 232 of the fingerprint recognition module are disposed on one side of the light adjustment piece 24. In addition, an area of the optical lens 231 is larger than a projected area of the first reflection surface 241 on a plane where the optical lens 231 is located, and larger than a projected area of the second reflection surface 242 on a plane where the optical lens 231 is located.

As shown in FIG. 2, when a finger is pressed on the first display panel 21, light emitted by a light emitting pixel unit of the first display panel 21 is blocked by the finger and then reflected into the terminal. The first reflection surface 241 changes a transmission path of the light entering from the first display panel 21 and reflects the light to the optical lens 231, and finally fingerprint imaging is implemented on the fingerprint sensor 232. Similarly, when a finger is pressed on the second display panel 22, light emitted by a light emitting pixel unit of the second display panel 22 is blocked by the finger and then reflected into the terminal. The second reflection surface 242 changes a transmission path of the light entering from the second display panel 22 and transmits the light to the optical lens 231, and finally fingerprint imaging is implemented on the fingerprint sensor 232. In this way, a function of recognizing a fingerprint on dual screens is implemented through one fingerprint recognition module.

In conclusion, the mobile terminal according to the embodiments of this disclosure transmits the light entering from the first display panel and the second display panel to the recognition module through the light adjustment piece, so that biometric information recognition (for example, a fingerprint recognition function) can be implemented using one recognition module for two display panels, thereby reducing costs and occupied space.

In some embodiments of this disclosure, as shown in FIG. 4, a recognition method applied to the mobile terminal according to any one of the above is further provided, including the following steps.

Step 401: Obtain a recognition result by the recognition module of in recognizing current biometric information input.

Herein, the result of recognizing the biometric information input is obtained to verify an identity of a user, thereby ensuring legality and security of an operation. The recognition module can recognize biometric information based on the light, entering from the first display panel and the second display panel, reflected by the light adjustment piece.

Step 402: When the recognition result indicates successful recognition, determine a target display panel to which the biometric information input is applied, where the target display panel is one of the first display panel and the second display panel.

In the embodiments of this disclosure, with the light adjustment piece, biometric information on dual screens can be recognized by using one recognition module. In other words, the light adjustment piece can reflect the light entering from the first display panel and the second display panel to the recognition module, and the recognition module can implement, based on the reflected light, a biometric information recognition function.

Since the recognition module can receive the light from both the first display panel and the second display panel, when the recognition succeeds, it is necessary to determine which display panel the biometric information input comes from. Herein, the determining a target display panel to which the biometric information input is applied can accurately and quickly determine which display panel the biometric information input comes from.

Step 403: Perform an operation function corresponding to successful recognition on the target display panel.

Herein, when a user enters the biometric information input on the first display panel, the first display panel is the target display panel, and when the user enters the biometric information input on the second display panel, the second display panel is the target display panel. When the recognition succeeds, the operation function (for example, unlocking a screen) corresponding to successful recognition is implemented on the target display panel (the first display panel or the second display panel), so that biometric information recognition and screen control functions can be implemented using one recognition module for dual screens.

According to the fingerprint recognition method in the embodiments of this disclosure, biometric information recognition can be implemented using one recognition module for two display panels, so as to implement screen control by using the biometric information on the two display panels, thereby reducing costs and occupied space.

Optionally, before step 401, the following is further included:
controlling the target display panel to which the biometric information input is applied to emit light, so that the light emitted by the target display panel is blocked by a biological body and then reflected to the target display panel, and the light adjustment piece reflects light entering from the target display panel to the recognition module.

In this case, when the biometric information input is detected, the target display panel to which the biometric information input is applied may be controlled to emit light. The target display panel is one of the first display panel and the second display panel, so that the light emitted by the target display panel is blocked by a biological body and then reflected to the target display panel. The light adjustment piece reflects the light entering from the target display panel to the recognition module. The recognition module uses the light reflected by the light adjustment piece to recognize the current biometric information input. In this way, biometric information recognition can be implemented using one recognition module for on two display panels, reducing costs and occupied space.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially or a part thereof that contributes to related technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The embodiments of this disclosure are described above with reference to the accompanying drawings, but this disclosure is not limited to these embodiments. These embodiments are only illustrative rather than restrictive.

## Claims

1. A mobile terminal, comprising:
a first display panel (21), wherein the first display panel (21) is a transparent piece;
a second display panel (22), wherein the second display panel (22) is disposed facing away from the first display panel (21), and the second display panel (22) is a transparent piece;
**characterized in that** the mobile terminal further comprises:
a recognition module (23), wherein the recognition module (23) is disposed between the first display panel (21) and the second display panel (22); and
a reflective unit (24), wherein the reflective unit (24) is disposed between the first display panel (21) and the second display panel (22), and is configured to reflect light entering from the first display panel (21) and the second display panel (22) to the recognition module (23);
wherein the recognition module (23) is configured to use the light reflected by the reflective unit (24) to perform biometric information recognition;
wherein the reflective unit (24) comprises a first reflection surface (241) and a second reflection surface (242), the first reflection surface (241) is obliquely disposed toward the first display panel (21), the first reflection surface (241) reflects light entering from the first display panel (21) to the recognition module (23), the second reflection surface (242) is obliquely disposed toward the second display panel (22), and the second reflection surface (242) reflects light entering from the second display panel (22) to the recognition module (23);
wherein the reflective unit (24) further comprises a third surface (243), and the first reflection surface (241), the third surface, and the second reflection surface (242) form an isosceles triangular prism.

2. The mobile terminal according to claim 1, wherein a reflective material layer (26) is disposed on each of the first reflection surface (241) and the second reflection surface (242).

3. The mobile terminal according to claim 2, wherein the reflective material layer (26) is made of aluminum or mercury.

4. The mobile terminal according to claim 2, wherein a transparent material layer (27) is disposed on each of the reflective material layers (26) of the first reflection surface (241) and the second reflection surface (242).

5. The mobile terminal according to claim 4, wherein the transparent material layer (27) is made of glass.

6. The mobile terminal according to claim 1, wherein the number of the recognition module is 1.

7. The mobile terminal according to claim 1, wherein a hollow structure is formed between the first reflection surface (241) and the second reflection surface (242), or a filling material is disposed between the first reflection surface (241) and the second reflection surface (242).

8. The mobile terminal according to claim 7, wherein the filling material is resin.

9. The mobile terminal according to any one of claims 1 to 7, wherein the recognition module (23) is a fingerprint recognition module.

10. The mobile terminal according to claim 9, wherein the fingerprint recognition module (23) comprises an optical lens (231) and a fingerprint sensor (232), and the optical lens (231) and the fingerprint sensor (232) are disposed between the first display panel (21) and the second display panel (22); and
the reflective unit (24) is configured to reflect the light entering from the first display panel (21) and the second display panel (22) to the optical lens (231).

11. A recognition method applied to the mobile terminal according to any one of claims 1 to 10, **characterized in that** the method comprises:
obtaining (401) a recognition result by the recognition module in recognizing current biometric information input;
when the recognition result indicates successful recognition, determining (402) a target display panel to which the biometric information input is applied, wherein the target display panel is one of the first display panel (21) and the second display panel (22); and
performing (403) an operation function corresponding to successful recognition on the target display panel.

12. The recognition method according to claim 11, before the obtaining a recognition result by the recognition module (23) of in recognizing current biometric information input, further comprising:
controlling the target display panel to which the biometric information input is applied to emit light, so that the light emitted by the target display panel is blocked by a biological body and then reflected to the target display panel, and the reflective unit (24) reflects light entering from the target display panel to the recognition module (23).

## Patentansprüche

1. Mobiles Endgerät, umfassend:
ein erstes Anzeigefeld (21), wobei das erste Anzeigefeld (21) ein transparentes Bauteil ist;
ein zweites Anzeigefeld (22), wobei das zweite Anzeigefeld (22) von dem ersten Anzeigefeld (21) abgewandt angeordnet ist und das zweite Anzeigefeld (22) ein transparentes Bauteil ist;
**dadurch gekennzeichnet, dass** das mobile Endgerät ferner Folgendes umfasst:
ein Erkennungsmodul (23), wobei das Erkennungsmodul (23) zwischen dem ersten Anzeigefeld (21) und dem zweiten Anzeigefeld (22) angeordnet ist; und
eine reflektierende Einheit (24), wobei die reflektierende Einheit (24) zwischen dem ersten Anzeigefeld (21) und dem zweiten Anzeigefeld (22) angeordnet und konfiguriert ist, um einfallendes Licht von dem ersten Anzeigefeld (21) und dem zweiten Anzeigefeld (22) zu dem Erkennungsmodul (23) zu reflektieren;
wobei das Erkennungsmodul (23) konfiguriert ist, um das von der Reflexionseinheit (24) reflektierte Licht zu verwenden, um biometrische Informations-erkennung durchzuführen;
wobei die Reflexionseinheit (24) eine erste Reflexionsfläche (241) und eine zweite Reflexionsfläche (242) umfasst, die erste Reflexionsfläche (241) schräg in Richtung des ersten Anzeigefelds (21) angeordnet ist, die erste Reflexionsfläche (241) Licht reflektiert, das von dem ersten Anzeigefeld (21) in das Erkennungsmodul (23) eintritt, die zweite Reflexionsfläche (242) schräg in Richtung des zweiten Anzeigefelds (22) angeordnet ist, und die zweite Reflexionsfläche (242) Licht reflektiert, das von dem zweiten Anzeigefeld (22) in das Erkennungsmodul (23) eintritt;
wobei die Reflexionseinheit (24) ferner eine dritte Oberfläche (243) umfasst und die erste Reflexionsfläche (241), die dritte Oberfläche und die zweite Reflexionsfläche (242) ein gleichschenkliges dreieckiges Prisma bilden.

2. Mobiles Endgerät nach Anspruch 1, wobei sowohl auf die erste Reflexionsfläche (241) als auch auf die zweite Reflexionsfläche (242) eine reflektierende Materialschicht (26) aufgebracht ist.

3. Mobiles Endgerät nach Anspruch 2, wobei die reflektierende Materialschicht (26) aus Aluminium oder Quecksilber gefertigt ist.

4. Mobiles Endgerät nach Anspruch 2, **dadurch gekennzeichnet, dass** eine transparente Materialschicht (27) auf jede von der reflektierenden Materialschichten (26) der ersten Reflexionsfläche (241) und der zweiten Reflexionsfläche (242) aufgebracht ist.

5. Mobiles Endgerät nach Anspruch 4, wobei die transparente Materialschicht (27) aus Glas gefertigt ist.

6. Mobiles Endgerät nach Anspruch 1, wobei die Anzahl des Erkennungsmoduls 1 ist.

7. Mobiles Endgerät nach Anspruch 1, wobei zwischen der ersten Reflexionsfläche (241) und der zweiten Reflexionsfläche (242) eine hohle Struktur gebildet ist oder zwischen der ersten Reflexionsfläche (241) und der zweiten Reflexionsfläche (242) ein Füllmaterial angeordnet ist.

8. Mobiles Endgerät nach Anspruch 7, wobei das Füllmaterial Harz ist.

9. Mobiles Endgerät nach einem der Ansprüche 1 bis 7, wobei das Erkennungsmodul (23) ein Fingerabdruckerkennungsmodul ist.

10. Mobiles Endgerät nach Anspruch 9, wobei das Fingerabdruckerkennungsmodul (23) eine optische Linse (231) und einen Fingerabdrucksensor (232) umfasst, und die optische Linse (231) und der Fingerabdrucksensor (232) zwischen dem ersten Anzeigefeld (21) und dem zweiten Anzeigefeld (22) angeordnet sind; und
die Reflexionseinheit (24) konfiguriert ist, um das von dem ersten Anzeigefeld (21) und dem zweiten Anzeigefeld (22) einfallende Licht auf die optische Linse (231) zu reflektieren.

11. Erkennungsverfahren, angewandt auf das mobile Endgerät nach einem der Ansprüche 1 bis 10, **dadurch gekennzeichnet, dass** das Verfahren Folgendes umfasst:
Erlangen (401) eines Erkennungsresultats durch das Erkennungsmodul bei Erkennen aktueller biometrischer Informationen;
wenn das Erkennungsresultat eine erfolgreiche Erkennung angibt, Bestimmen (402) eines Ziel-Anzeigefelds, auf das der Eingang biometrischer Daten angewendet wird, wobei das Ziel-Anzeigefeld eines von dem ersten Anzeigefeld (21) und dem zweiten Anzeigefeld (22) ist; und
Durchführen (403) einer Betriebsfunktion, die einer erfolgreichen Erkennung auf dem Ziel-Anzeigefeld entspricht.

12. Erkennungsverfahren nach Anspruch 11, das vor dem Erlangen eines Erkennungsresultats durch das Erkennungsmodul (23) bei Erkennen eines Eingangs aktueller biometrischer Informationen ferner Folgendes umfasst:
Steuern des Ziel-Anzeigefelds, in das die biometrischen Eingabedaten eingegeben werden, um Licht zu emittieren, sodass das von dem Ziel-Anzeigefeld emittierte Licht von einem biologischen Körper blockiert und dann zurück zu dem Ziel-Anzeigefeld reflektiert wird, und die Reflexionseinheit (24) Licht, das von der Ziel-Anzeigetafel eintritt, zu dem Erkennungsmodul (23) reflektiert.

## Revendications

1. Terminal mobile, comprenant :
un premier panneau d'affichage (21), dans lequel le premier panneau d'affichage (21) est une pièce transparente ;
un deuxième panneau d'affichage (22), dans lequel le deuxième panneau d'affichage (22) est disposé à l'opposé du premier panneau (21) et le deuxième panneau d'affichage (22) est une pièce transparente ;
**caractérisé en ce que** le terminal mobile comprend en outre :
un module de reconnaissance (23), dans lequel le module de reconnaissance (23) est disposé entre le premier panneau d'affichage (21) et le deuxième panneau d'affichage (22) ; et
une unité réfléchissante (24), dans lequel l'unité réfléchissante (24) est disposée entre le premier panneau d'affichage (21) et le deuxième panneau d'affichage (22), et est configurée pour réfléchir la lumière entrant par le premier panneau d'affichage (21) et le deuxième panneau d'affichage (22) vers le module de reconnaissance (23) ;
dans lequel le module de reconnaissance (23) est configuré pour utiliser la lumière réfléchie par l'unité réfléchissante (24) afin de procéder à la reconnaissance des informations biométriques ;
dans lequel l'unité réfléchissante (24) comprend une première surface de réflexion (241) et une deuxième surface de réflexion (242) ; la première surface de réflexion (241) est disposée obliquement vers le premier panneau d'affichage (21), la première surface de réflexion (241) réfléchit la lumière provenant du premier panneau d'affichage (21) vers le module de reconnaissance (23) ; la deuxième surface de réflexion (242) est disposée obliquement vers le deuxième panneau d'affichage (22) et la deuxième surface de réflexion (242) réfléchit la lumière provenant du deuxième panneau d'affichage (22) vers le module de reconnaissance (23) ;
dans lequel l'unité réfléchissante (24) comprend en outre une troisième surface (243), et la première surface de réflexion (241), la troisième surface, ainsi que la deuxième surface de réflexion (242) forment un prisme triangulaire isocèle.

2. Terminal mobile selon la revendication 1, dans lequel une couche de matériau réfléchissant (26) est disposée sur la première surface de réflexion (241) et la deuxième surface de réflexion (242).

3. Terminal mobile selon la revendication 2, dans lequel la couche de matériau réfléchissant (26) est faite d'aluminium ou de mercure.

4. Terminal mobile selon la revendication 2, dans lequel une couche de matériau transparent (27) est disposée sur chacune des couches de matériau réfléchissant (26) de la première surface de réflexion (241) et de la deuxième surface de réflexion (242).

5. Terminal mobile selon la revendication 4, dans lequel la couche de matériau transparent (27) est en verre.

6. Terminal mobile selon la revendication 1, dans lequel le nombre de modules de reconnaissance est égal à 1.

7. Terminal mobile selon la revendication 1, dans lequel une structure creuse est formée entre la première surface de réflexion (241) et la deuxième surface de réflexion (242), ou un matériau de remplissage est disposé entre la première surface de réflexion (241) et la deuxième surface de réflexion (242).

8. Terminal mobile selon la revendication 7, dans lequel le matériau de remplissage est une résine.

9. Terminal mobile selon l'une quelconque des revendications 1 à 7, dans lequel le module de reconnaissance (23) est un module de reconnaissance d'empreintes digitales.

10. Terminal mobile selon la revendication 9, dans lequel le module de reconnaissance d'empreintes digitales (23) comprend une lentille optique (231) et un capteur d'empreintes digitales (232), et la lentille optique (231) et le capteur d'empreintes digitales (232) sont disposés entre le premier panneau d'affichage (21) et le deuxième panneau d'affichage (22) ; et
l'unité réfléchissante (24) est configurée pour réfléchir la lumière provenant du premier panneau d'affichage (21) et du deuxième panneau d'affichage (22) vers la lentille optique (231).

11. Procédé de reconnaissance appliqué au terminal mobile selon l'une quelconque des revendications 1 à 10, **caractérisé en ce que** le procédé comprend :
l'obtention (401) d'un résultat par le module de reconnaissance lors de l'enregistrement des informations biométriques actuelles ;
lorsque le résultat de la reconnaissance indique une reconnaissance réussie, la détermination (402) d'un panneau d'affichage cible auquel l'entrée d'informations biométriques est appliquée, dans lequel le panneau d'affichage cible est l'un parmi le premier panneau d'affichage (21) et le deuxième panneau d'affichage (22) ; et
l'exécution (403) d'une fonction d'opération correspondant à une reconnaissance réussie sur le panneau d'affichage cible.

12. Procédé de reconnaissance selon la revendication 11, avant l'obtention d'un résultat de reconnaissance par le module de reconnaissance (23) lors de l'analyse de l'entrée de l'information biométrique actuelle, comprenant en outre :
le contrôle du panneau d'affichage cible auquel est appliquée l'entrée d'informations biométriques, de sorte que la lumière émise par le panneau d'affichage cible soit bloquée par un corps biologique, puis réfléchie vers le panneau d'affichage cible, et que l'unité réfléchissante (24) réfléchisse la lumière provenant du panneau d'affichage cible vers le module de reconnaissance (23).
